# EUROPEAN PATENT APPLICATION

(11) **EP 4 606 488 A1**
(43) Date of publication of application: **27.08.2025**
(21) Application number: 24158862.3
(22) Date of filing: 21.02.2024
(51) Int. Cl.: B05C 5/02

(54) **SYSTEM AND METHOD FOR BATTERY MANUFACTURING**

(71) Applicant: LG Energy Solution, Ltd., Seoul 07335 (KR)
(72) Inventor: JUNG, Jae Sun, 34122 Daejeon (KR); LEE, Jae Keun, 34122 Daejeon (KR); LEE, Gil Seon, 34122 Daejeon (KR); KIM, II Soo, 34122 Daejeon (KR)
(74) Representative: Goddar, Heinz J.

(57) **Abstract**

Disclosed herein is a battery manufacturing system comprising a deposition device and a cleaning device. The deposition device configured to discharge a battery material through a deposition opening in a principal deposition direction. The cleaning device arranged outside of the deposition device and configured to discharge a cleaning fluid toward the deposition opening, The cleaning device is configured to move perpendicular and/or parallel to the principal deposition direction.

## Description

### BACKGROUND

The present invention relates to a battery manufacturing system and a battery manufacturing method. In particular, the present invention relates to a battery manufacturing system and a battery manufacturing method including means for cleaning a deposition device for depositing battery material on a substrate.

The manufacturing process of a battery may include deposition of a battery material, such as an electrode active material or an insulator material, onto a substrate such as an electrode sheet. For this purpose, a deposition device may be used that receives the battery material as a liquid-solid mixture and discharges it through a deposition opening. The battery manufacturing process may require that the deposition opening be cleaned from residues of the battery material, for example if a deposition process is interrupted, if a procedural error occurs, if the battery material needs to be exchanged, etc.

Conventionally, such cleaning is performed by human personnel manually removing residues of the battery material from the deposition opening, e.g., by brushing, wiping and the like. However, such manual cleaning process may be labor-intensive and time-consuming, and it may be difficult to obtain a consistent (or uniform or standardized) cleaning result.

Against this background, it is desired to increase the efficiency of the battery manufacturing, particularly with respect to cleaning of a deposition device.

### SUMMARY

The technical problems known from the prior art are solved by the invention as defined by the independent claims. Particular examples of the invention are given by the additional features of the dependent claims.

The invention may be embodied by a battery manufacturing system as disclosed herein. Additionally or alternatively, the invention may be embodied by a battery manufacturing method as disclosed herein. The battery manufacturing system as disclosed herein may be suited to perform the battery manufacturing method as disclosed herein. Any, some or all of the features of the battery manufacturing system as disclosed herein may also be implemented in the battery manufacturing method as disclosed herein, unless indicated otherwise or technically inappropriate. Accordingly, the technical effect and advantages described herein with respect to the battery manufacturing system may also apply to the battery manufacturing method disclosed herein.

The battery manufacturing method as disclosed herein may be suited to be carried out by the battery manufacturing system as disclosed herein. Any, some or all of the features of the battery manufacturing method as disclosed herein may also be implemented in the battery manufacturing system as disclosed herein, unless indicated otherwise or technically inappropriate. Accordingly, the technical effect and advantages described herein with respect to the battery manufacturing method may also apply to the battery manufacturing system disclosed herein.

A battery manufacturing system may be provided. The battery manufacturing system may comprise a deposition device and a cleaning device. The deposition device may be configured to discharge a battery material through a deposition opening in a principal deposition direction. The cleaning device may be arranged outside of the deposition device. The cleaning device may be configured to discharge a cleaning fluid toward the deposition opening. The cleaning device may be configured to move perpendicular to the principal deposition direction. Additionally or alternatively, the cleaning device may be configured to move parallel to the principal deposition direction.

Accordingly, the battery manufacturing system as disclosed herein may allow for cleaning the deposition device, particularly the deposition opening thereof, in an effective and efficient manner. Furthermore, the battery manufacturing system as disclosed herein may allow for an automation of the cleaning of the deposition device, particularly the deposition opening thereof. The automation of the cleaning may further increase the consistency (or uniformity or conformity with a required standard) of a cleaning result.

The battery manufacturing system may be implemented as a single device or as a distributed system comprising multiple apparatuses or devices. Additionally or alternatively, the battery manufacturing system may be implemented as a unit (or an arrangement or an entity or the like) of multiple operably and/or physically interconnected components. The battery manufacturing system as disclosed herein may be provided as part of a facility, a factory, a plant or the like in which one or more batteries or parts thereof are manufactured.

Particularly, the invention may be embodied by an automated plant, for example by a smart factory, that comprises the battery manufacturing system as disclosed herein.

Herein, the term battery may generally include or be any electrochemical cell for energy storage. In particular, the battery as used herein may include a principal battery and/or a secondary battery, unless indicated otherwise or technically inappropriate. For example, the battery as used herein refers to a secondary battery, i.e., a rechargeable battery. For example, the battery may comprise one or more layers of electrodes and one or more layers of separators stacked in a specific manner. The battery may be a coin-type, cylindrical, prismatic, or pouch-type battery. Particularly, the battery may be configured to provide power to an electric vehicle. Hereinafter, a reference will be made to "a" battery, i.e., in an indefinite manner, in order not to limit the subject matter to the manufacture of a single particular battery.

The deposition device may be configured to discharge the battery material through the deposition opening in the principal deposition direction. In particular, the deposition device may be configured to receive the battery material inside the deposition device and discharge the received battery material through the deposition opening in the principal deposition direction. In particular, the deposition device may be configured to discharge the battery material to the outside, for example onto a substrate, on which the battery material is to be deposited. In some examples, the deposition device may comprise a die arrangement, an ejector, an extruder, or the like. For example, the deposition device may include two or more separate parts, which may include, for example, an upper die and a lower die, a first die half and a second die half, or a die cover and a die base, or the like. The separate parts of the deposition device may be spaced from each other (equidistantly) to form the cavity therebetween. Alternatively, the cavity may be formed as a void space inside a single-piece body of the deposition device.

In specific examples, the deposition device may include two or more separate parts, which may include, for example, an upper die and a lower die, a first die half and a second die half, or a die cover and a die base, or the like. The cavity may be formed as a gap between the two or more separate parts of the die. Alternatively, the cavity may be formed as a void space inside a single-piece body of the die, and the opening may be formed at an outer surface of the die so as to expose the cavity to the outside of the die.

The deposition device comprises the deposition opening. The deposition opening as used herein is part of the deposition device. The deposition opening may be a two-dimensional void (hollow) area. The deposition opening may have a rectangular shape in a view parallel to the principal deposition direction., The deposition opening may be formed at an outermost position of the deposition device in the principal deposition direction. For example, the deposition opening may be formed between outer surfaces of an upper die and a lower die of the deposition device. The deposition opening may fluidly communicate with the cavity. In such examples, the deposition device may be configured to receive the battery material in the cavity and to discharge the battery material in the principal deposition direction from the cavity through the deposition opening. In this manner, the deposition device may be configured to extrude the battery material through the deposition opening.

When viewing in the direction opposite to the principal deposition direction, the deposition opening may have a slit-shape elongated along a width direction perpendicular to the principal deposition direction. Particularly, the deposition opening may have a uniform height in a height direction that is perpendicular to both the principal deposition direction and the width direction. The height being uniform may indicate that the height is constant at any position in the width direction. Unless indicated otherwise, the principal deposition direction, the height direction and the width direction as used herein may be perpendicular to one another.

Herein, the cavity of the deposition device may refer to a hollow space formed in the deposition device. The cavity may refer to a hollow space and may be considered as a structural feature of the deposition device, unless indicated otherwise or technically inappropriate. Accordingly, the deposition device may comprise the cavity.

The principal deposition direction as used herein may refer to a direction in which the battery material is extruded from/by the deposition device. In other words, the principal deposition direction may indicate a direction along which the battery material is discharged from the deposition opening of the deposition device. Considering that the battery material may be a flowable material (as detailed below), the battery material may spread out after discharging from the deposition device. In this case, the principal deposition direction may refer to an averaged direction over all directions in which the material is extruded from the deposition opening of the deposition device. Alternatively or additionally, the principal deposition direction may be parallel to a flow direction of the battery material from the cavity to the deposition opening. As such, the principal deposition direction may have a positive way in which the battery material is to be discharged, and a negative way that is opposite thereto. Herein, a distinction is made between the positive principal deposition direction and the negative principal deposition direction, where appropriate. Otherwise, the principal deposition direction may refer to both ways, unless technically inappropriate.

The battery material may be or include a mixture of a liquid material and a solid material, and/or a material that is partly in a liquid state and partly in a solid state. In specific examples, the battery material may include a binder and a solid active material, which may be provided, for example, as a granular and/or powder material. In alternative examples, the battery material may be or include an electrically isolating material.

Generally, the battery material may include an active material that is used for forming an electrode of a battery, particularly a secondary battery. The material may include an active material that is used for forming a positive electrode or a negative electrode. The battery material, particularly the solid active material, may contain, as a non-exhaustive list of examples, lithium-cobalt oxide (LCO), lithium nickel cobalt manganese oxide (NCM), lithium nickel cobalt aluminum oxide (NCA), lithium manganese oxide (LMO), lithium nickel manganese spinel (LNMO), lithium iron phosphate (LFP). The battery material, particularly the solid active material, may also include graphite, pure lithium and/or silicon.

The binder may be a polymeric binder. The binder may be or include polyvinylidene fluoride (PVDF), polymethyl acrylate (PMMA), carboxymethylcellulose (CMC), polyacrylate, xanthan gum, polyethylene glycol, or styrene butadiene. The battery material may further contain one or more liquid components. The liquid component may be or include water, in particular deionized water. Alternatively or additionally, the liquid component may be or include an organic solvent, such as tetrahydrofuran (THF) or N-methyl-2-pyrrolidon (NMP).

The battery material may additionally contain solid conductive particles, for example carbon black and/or carbon nanotubes. The battery material may additionally contain dispersants.

The battery material may be a flowable and/or viscous material. The battery material may be also referred to as a slurry. The battery material may have a viscosity of 10² mPa·s or more at an atmospheric pressure (1013.25 hPa) and 25°C. More particularly, the battery material may have a viscosity of 10³ mPa·s or more, 10⁴ mPa·s or more, 10⁶ mPa·s or more, 10¹⁰ mPa·s or more, or 10¹² mPa·s or more at the atmospheric pressure and 25°C. An upper boundary for the viscosity may be given by the transition into the solid state, and may be at or above 10²⁴ mPa·s at the atmospheric pressure and 25°C. Unless indicated otherwise, the viscosity may be determined using a viscosimeter according to the standard EN ISO 3219. Alternatively or additionally, the viscosity may be measured, for example, using a Stabinger viscometer SVM kinematic viscometer in accordance with ASTM 7042, at the atmospheric pressure and 25°C. For the sake of brevity, the terms battery material and slurry may be used interchangeably hereinafter, unless indicated otherwise or technically inappropriate.

The cleaning device may be configured, in particular constructed and arranged, to discharge the cleaning fluid toward (against) the deposition opening. Particularly, the cleaning device may be configured to remove the battery material from the deposition opening by discharging the cleaning fluid toward the deposition opening. The cleaning device as used herein may be a single device or a system of multiple operably interconnected components. Herein, the expression toward the deposition opening may also include the meaning that the cleaning fluid is discharged against the deposition opening, unless indicated otherwise or technically inappropriate.

The cleaning device may comprise one or more nozzles to discharge, for example in a spraying, propelling, jetting, streaming or spouting manner, the cleaning fluid toward the deposition opening. The one or more nozzles may be arranged so as to direct the cleaning fluid toward the deposition opening. The one or more nozzles may be further implement one, some or all of the features of a first nozzle, a second nozzle and/or a third nozzle as detailed below, unless indicated otherwise or technically inappropriate. The one or more nozzles may be embodied by the first nozzle, the second nozzle and/or the third nozzle as detailed below, unless indicated otherwise or technically inappropriate.

For example, the cleaning device may be fluidly connected to a supply that supplies the cleaning device with the cleaning fluid. Alternatively or additionally, the cleaning device may be provided with a container that stores the cleaning fluid or a part thereof. In particular, the supply and/or the reservoir may be fluidly connected to the one or more nozzles and provide the nozzle or each of the nozzles with the cleaning fluid. In addition, the cleaning device may be supplied with a compressed gas, for example, compressed air.

The cleaning fluid may be or include a liquid that is suited to remove the battery material. For example, the cleaning fluid may be or include water. Additionally, the cleaning fluid may include a gas, in particular air. In specific examples, the cleaning fluid may be or include a liquid that forms part of the battery material, for example as a solvent. As an example, water may be used a solvent in a negative electrode active material, which may be considered as the battery material in this regard. In another example, the cleaning fluid may be or include N-Methyl-2-pyrrolidone (NMP), dimethyl sulfoxide (DMSO) or triethyl phosphate (TEP). These examples may be used as a solvent in a positive electrode active material, which may be considered as the battery material.

In some examples, the cleaning device may comprise a cleaning head in which some of the components of the cleaning device are accommodated. The cleaning head may be configured to be moved perpendicular and/or parallel to the principal deposition direction. The cleaning head may accommodate one or more nozzles, which may include any, some or all of a first nozzle, a second nozzle and a third nozzle described in detail below. The cleaning head may accommodate a blower as detailed below. Optionally, the cleaning head may comprise a housing to accommodate (some of) the components of the cleaning device. One or more through-openings may be formed in the housing of the cleaning head in order to allow for fluid connection, for example, with a supply for the cleaning fluid and/or, optionally, with a supply for a drying gas as detailed below.

The cleaning device is further configured to move perpendicular to the principal deposition direction. Particularly, the cleaning device may be configured to move perpendicular and/or parallel to the principal deposition direction while discharging the cleaning fluid toward the deposition opening. Additionally or alternatively, the cleaning device is configured to move parallel to the principal deposition direction. The principal deposition direction may be as specified above.

In a specific example, the deposition opening may have a shape elongated along a width direction perpendicular to the principal deposition direction, and the cleaning device may be configured to move in the width direction perpendicular to the principal deposition direction. Accordingly, the cleaning device may be configured to move along the direction in which the deposition opening is elongated. In this manner, the battery manufacturing system may allow for cleaning the deposition opening along its entire width, without requiring a cleaning device that extends over the entire width of the cleaning device.

According to an example, the battery manufacturing system may further comprise an actuator configured to move the cleaning device in a direction perpendicular and/or parallel to the principal deposition direction of the deposition device. The actuator may be or include an electromotor configured to move the cleaning device in a direction perpendicular and/or parallel to the principal deposition direction of the deposition device.

The use of an actuator, particularly an electromotor, may allow for an automation of the moving of the cleaning device in a direction perpendicular and/or parallel to the principal deposition direction. Accordingly, the implementation of automation of the cleaning of the deposition device, particularly its deposition opening may be facilitated.

According to an example, the battery manufacturing system may further comprise a guide rail on which the cleaning device is mounted. The guide rail may extend in a direction perpendicular to the principal deposition direction and may be configured to guide the cleaning device at a constant distance from the deposition opening. In addition, the battery manufacturing system may comprise the actuator as detailed above, and the actuator may be configured to move the cleaning device (being mounted on the guide rail) along the guide rail perpendicular to the principal deposition direction. The use of the guide rail, optionally in addition to the actuator, may facilitate the implementation of automation of the cleaning of the deposition device, and particularly the cleaning of its deposition opening.

According to an example, the deposition device and the cleaning device are arranged above one another in a direction parallel to the gravitation. When the deposition device and the cleaning device are arranged above one another in a direction parallel to the gravitation, the deposition device may be arranged such that the principal deposition direction is antiparallel (i.e., oriented in an opposite way) or parallel to the gravitation. The deposition device may be arranged so that the deposition opening is substantially perpendicular to the gravitation (i.e., arranged horizontally). Furthermore, the deposition device may be arranged so that the height direction and the width direction are perpendicular to the gravitation. In some examples, the cleaning device may be arranged above the deposition device so as to discharge the cleaning fluid from above downward toward the deposition opening (and thus toward the deposition device). This arrangement may be advantageous in that the gravitation is exploited to additionally accelerate the cleaning fluid toward the deposition opening.

According to an example, the cleaning device may comprise a first nozzle and a second nozzle. The first nozzle may be configured to discharge the cleaning fluid in a first nozzle direction toward the deposition opening. The second nozzle may be configured to discharge the cleaning fluid in a second nozzle direction toward the deposition opening. The first nozzle direction and the second nozzle direction may be not parallel to each other. In particular, the first nozzle and the second nozzle may be arranged in such a manner relative to each other that the first nozzle direction and the second nozzle direction are not parallel to each other. In specific examples, the first nozzle and the second nozzle may be spaced from each other. The first nozzle and the second nozzle may each direct at the deposition opening.

Accordingly, the cleaning device may be configured to discharge the cleaning fluid toward the deposition opening under different spraying angles from the first nozzle and the second nozzle. This may further increase the efficacy of the cleaning of the deposition opening.

According to an example, the cleaning device further comprises a third nozzle configured to discharge the cleaning fluid in a third nozzle direction toward the deposition opening. The third nozzle direction may be not parallel to both of the first nozzle direction and the second nozzle direction. In particular, the first nozzle, the second nozzle and the third nozzle may be arranged in such a manner relative to one another that the first nozzle direction, the second nozzle direction and the third nozzle direction are not parallel to one another. In specific examples, the first nozzle, the second nozzle and the third nozzle may be spaced from one another. The first nozzle, the second nozzle and the third nozzle may each direct at the deposition opening.

Accordingly, the cleaning device may be configured to discharge the cleaning fluid toward the deposition opening under different spraying angles from the different nozzles. This may further increase the efficacy of the cleaning of the deposition opening.

According to an example, one of the first nozzle direction and the second nozzle direction may be parallel to the principal deposition direction. Alternatively, one of the first nozzle direction and the second nozzle direction may be inclined at an angle of 15 degrees or less, 10 degrees or less, or 5 degrees or less, from the principal deposition direction. In a further example, one of the first nozzle direction, the second nozzle direction and the third nozzle direction is parallel to the principal deposition direction, or is inclined at an angle of 15, degrees or less, or 10 degrees or less, or 5 degrees or less from the principal deposition direction.

Specifically, the first nozzle, the second nozzle and the third nozzle may be arranged in a manner to surround the deposition opening. The first nozzle, the second nozzle and the third nozzle may be arranged above (with respect to the gravitation) and around the deposition opening. The first nozzle, the second nozzle and the third nozzle may each face (i.e., directed at) the deposition opening. The first nozzle, the second nozzle and the third nozzle may be arranged at a uniform (or similar) distance from the deposition opening. The first nozzle, the second nozzle and the third nozzle may be spaced from each other.

In particular, the first nozzle, the second nozzle and the third nozzle may be arranged so that the first nozzle direction, the second nozzle direction and the third nozzle direction are directed at the deposition opening. The first nozzle may be arranged so that the first nozzle direction is perpendicular to the deposition opening (and/or parallel to the principal deposition direction) or inclined at an angle of 5 degrees or less from the principal deposition direction. The second nozzle may be arranged so that the second nozzle direction is inclined at an angle of larger than 5 degrees from the principal deposition direction. The third nozzle may be arranged so that the third nozzle direction is inclined at an angle of larger than 5 degrees from the principal deposition direction.

Accordingly, the battery manufacturing system as disclosed herein may allow for accelerating (e.g., by streaming or jetting) the cleaning fluid toward the deposition opening under different angles. The battery manufacturing system as disclosed herein thereby increases the efficacy of the cleaning of the deposition opening.

In some examples, the first nozzle may comprise an array of orifices through (via, from and/or along) which the cleaning fluid can be discharged toward the deposition opening. More generally, any, some or all of the first nozzle, the second nozzle and the third nozzle may each comprise a single orifice or a single opening, through which the cleaning fluid is discharged (toward the deposition opening), unless indicated otherwise or technically inappropriate. Additionally or alternatively, any, some or all of the first nozzle, the second nozzle and the third nozzle may each comprise multiple orifices or multiple openings. Each of the multiple orifices or the multiple openings may be configured so that the cleaning fluid can be discharged therethrough. For example, the multiple orifices may be arranged in an array of (straight) columns and rows, or arranged along straight or circular or otherwise curved lines, or arranged in any manner suitable. In the following, the terms orifices and openings may be used interchangeably in connection to the nozzles, unless indicated otherwise or technically inappropriate.

Accordingly, the cleaning device is provided with one or more nozzles each having one or more orifices for discharging the cleaning fluid therethrough. These features may allow for a customization of the discharging of the cleaning fluid toward the deposition opening by adjusting and designing the orifice(s). Accordingly, the versatility and applicability of the battery manufacturing system may be further increased.

In some examples, the orifices of the array of orifices of any of the first nozzle, the second nozzle and the third nozzle may be arranged that a minimum distance of 0.1 mm to 2.5 mm, or 0.3 mm to 2.3 mm, or 0.5 mm to 2.0 mm, between two neighboring orifices is maintained. The distance may be measured between the centers of the neighboring orifices (in a top view for example parallel to the respective nozzle direction).

In some examples, the first nozzle may comprise a circular orifice with a diameter of 0.05 mm to 2.0 mm, or 0.1 mm to 1.0 mm, or 0.1 mm to 0.5 mm. Unless indicated otherwise or technically inappropriate, the same may also apply to any of the second nozzle and the third nozzle.

Accordingly, the cleaning of the deposition opening by discharging the cleaning fluid may become highly customizable and highly definable. Also, the above mentioned features may facilitate the manufacturing and the maintenance of the battery manufacturing system. Accordingly, an efficiency of the battery manufacturing process may be increased.

In some examples, the cleaning device further comprises a blower configured to blow a drying gas toward the deposition opening. The drying gas may be any gas that is suited to carry away a humidity, in particular residues of the cleaning fluid that has been discharged, from the deposition opening. For example, the drying gas may be or contain air. The blower may be fluidly connected to a gas supply which supplies the blower with the drying gas. The blower may allow for removing the cleaning fluid from the deposition opening, e.g., for drying purposes, without making physical contact with the deposition device, thus preventing any damage or contamination of the deposition device.

In specific examples, the blower may be configured to blow a thin, high-velocity sheet of air onto the deposition opening. The blower may be configured to produce a laminar stream of the drying gas, for example through a slit-shaped (thin and elongated) nozzle. For example, the slit-shaped nozzle may have a slit gap of 0.1 mm to 5 mm, or 0.2 mm to 2 mm, or 0.3 mm to 1 mm. The blower (or its nozzle) may be configured to span an entire height of the deposition opening perpendicular to the principal deposition direction and, for example, perpendicular to the width direction along which the deposition direction may be elongated. The nozzle of the blower may be shaped, dimensioned and arranged so as to extend around the deposition opening. The blower may also be referred to as an air knife.

In some examples, the blower is arranged so that its distance to any of the first nozzle and to the second nozzle is 10 mm to 200 mm, or 25 mm to 100 mm. The distance between the blower and the first nozzle and/or the second nozzle may be determined in the width direction perpendicular to the principal deposition direction. If the distance between the blower and the nozzles through which the cleaning fluid is discharged is maintained in the above range, the blower may be sufficiently distanced not to be wetted by the cleaning fluid, while keeping a space requirement for the cleaning device at a minimum.

In some examples, the battery manufacturing system may further comprise a control unit configured to cause the cleaning device to move parallel and/or perpendicular to the principal deposition direction. The control unit may be configured to control a flow rate of the cleaning fluid discharged by the cleaning device toward the deposition opening. For this purpose, the control unit may be configured to control, automatically or on command, the nozzles of the cleaning device, including the first nozzle, the second nozzle and the third nozzles if applicable, so as to discharge the cleaning fluid toward the deposition opening. Additionally or alternatively, the control unit may be configured to control, automatically or on command, a valve that is installed between the nozzles of the cleaning device and the supply that supplies the cleaning device with the cleaning fluid. The control unit may be configured to control a flow rate of the drying gas blown by the blower. For this purpose, the control unit may be configured to control, automatically or on command, a valve that is installed between the blower and the supply that supplies the blower with the drying gas.

According to a further aspect, a battery manufacturing method is disclosed. The battery manufacturing method comprises: discharging a battery material through a deposition opening of a deposition device in a principal deposition direction; by a cleaning device arranged outside of the deposition device, discharging a cleaning fluid toward the deposition opening; and moving the cleaning device perpendicular and/or parallel to the principal deposition direction.

As mentioned, the battery manufacturing method as disclosed herein may be suited to be carried out by the battery manufacturing system as disclosed herein. Any, some or all of the features of the battery manufacturing system as disclosed herein may also be implemented in the battery manufacturing method as disclosed herein and vice versa, unless indicated otherwise or technically inappropriate. The technical effect and advantages described herein with respect to the battery manufacturing system may accordingly apply to the battery manufacturing method.

In particular, the battery manufacturing method may be performed after discharging the battery material (e.g., to deposit the battery material onto an electrode substrate) using the deposition device. The discharging of the battery material may be stopped due to the procedural requirements, for example when the deposition device requires maintenance, repair or adjustment, or when the battery material needs to be exchanged. After stopping operation of the deposition device and before starting a new operation, it may be required or desired that the deposition device, in particular the deposition opening, be cleaned from residues of the battery material. Here, the battery manufacturing method as disclosed herein may provide efficient and effective means for cleaning the deposition opening and the deposition device.

In some examples, the battery manufacturing method further comprises blowing a drying gas toward the deposition opening to dry the deposition opening from the cleaning fluid. The blowing may implement any, some or all of the features described above with respect to the blower of the battery manufacturing system.

The battery manufacturing method as disclosed herein may be a computer implemented method. As such, the battery manufacturing method may be provided as instructions to be carried out by a process in a machine-readable storage medium.

### BRIEF DESCRIPTION OF THE DRAWINGS

The drawings and the description of the drawings are provided to support the understanding of the invention. The drawings merely depict concretized examples for the illustration purposes and do not limit the scope of the invention thereto.
FIG. 1 is a schematic view of a battery manufacturing system according to an example.
FIG. 2 is a perspective view of a battery manufacturing system according to an example.
FIG. 3 is a perspective view of a cleaning device according to an example.
FIG. 4 is a cross-sectional side view of the cleaning device of FIG. 3.
FIG. 5 is a cross-sectional front view of the cleaning device of FIG. 3 and 4.
FIG. 6 is a plan view of nozzles of a cleaning device according to an example.
FIG. 7 is a flow diagram of a battery manufacturing method according to an example.

### DETAILED DESCRIPTION OF THE DRAWINGS

In the following, particular aspects illustrated in the accompanying drawings are described in detail. The drawings illustrate are intended to help understanding the present invention. Herein and in the drawings, same reference sign or a series of reference signs may be used to indicate a same, similar or analogical element in different examples.

Unless indicated otherwise or technically inappropriate, the examples described below with reference to the drawings can include any, some or all of the features described above, and a repetitive description is omitted. For the sake of brevity and efficiency of the description, the examples described below with reference to the drawings can include any, some or all of the features generally described above, unless indicated otherwise or technically inappropriate. Further, the examples described below with reference to the drawings can include any, some or all of the features described with reference to the respectively previous example, unless indicated otherwise or technically inappropriate. It is noted that the drawings may be not to scale. Particular features may be depicted in an enlarged or reduced manner for the sake of a clear display.

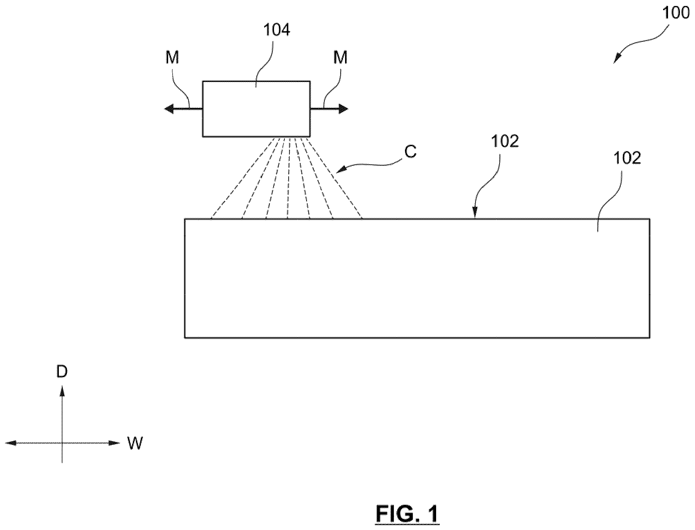

FIG. 1 is a schematic view of a battery manufacturing system 100 according to an example. The battery manufacturing system 100 comprises a deposition device 102 and a cleaning device 104. The deposition device 102 is configured to discharge a battery material through a deposition opening 106 in a principal deposition direction D. The cleaning device 104 is arranged outside of the deposition device 102 and is configured to discharge a cleaning fluid F toward the deposition opening 106. The cleaning device 104 is configured to move (as symbolized by arrows M) perpendicular to the principal deposition direction D. Optionally, or alternatively, the cleaning device 104 may be configured to move in a direction parallel (in both ways) to the principal deposition direction D.

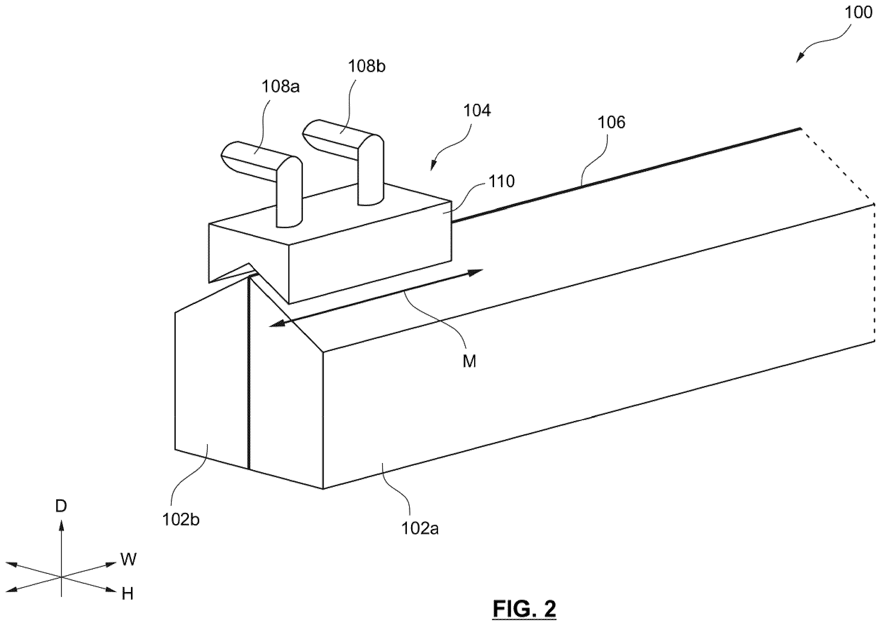

In the example shown in FIG. 1, the cleaning device 104 is configured to move parallel to a width direction W, which is perpendicular to the principal deposition direction D. Although not explicitly shown in FIG. 1, the deposition opening 106 may have a slit-shape elongated along the width direction W. The deposition opening 106 may extend in a plane perpendicular to the principal deposition direction D, and thus parallel to the width direction W and a height direction H (see FIG. 2), which is perpendicular to both the principal deposition direction D and the width direction W.

Although not explicitly shown in FIG. 1, the battery manufacturing system 100 may further comprise an actuator, in particular an electric motor (electromotor), that is configured to move the cleaning device 104 in the direction perpendicular to the principal deposition direction D. Optionally, or alternatively, the actuator may be configured to move the cleaning device 104 in a direction parallel (in both ways) to the principal deposition direction D.

Each of the components and features shown in FIG. 1 may implement any, some or all of the respective features as described above. Moreover, the battery manufacturing system 100 may be suited to carry out the battery manufacturing method as disclosed herein.

Accordingly, the battery manufacturing system 100 may allow for cleaning the deposition device 102, particularly the deposition opening 106, in an effective and efficient manner. Furthermore, the battery manufacturing system 100 may allow for an automation of the cleaning of the deposition device 102, particularly the deposition opening 106. The automation of the cleaning may further increase the consistency (or uniformity or conformity with a required standard) of a cleaning result.

FIG. 2 is a perspective view of a battery manufacturing system according to an example. The deposition device 102 of the example shown in FIG. 2 may comprise a die having two die parts 102a and 102b with a gap formed therebetween, for example by means of a shim plate or an interposer. The two die parts 102a and 102b may be provided as die halves, as a die base and a die cover, or the like, that form a die in combination. The gap may provide a cavity in which the battery material is received. For example, the die of the deposition device 102 may have a manifold, e.g., as a recessed surface portion, formed between the two die parts 102a and 102b to receive the battery material therein.

The deposition device 102 is configured to discharge the received battery material through the deposition opening 106 in the principal deposition direction D. The die of the deposition device 102 has a black-shaped body part, from which a discharge part extends outwardly tapering in the principal deposition direction D, until terminating at the deposition opening 106. Accordingly, the top side of the die (i.e., a side of the die in the (positive) primal deposition direction) has a roof-like shape with a linear crest (or linear zenith, linear summit or linear apex) that extends in the width direction W. In addition, die of the deposition device 102 may have a lip portion (not shown in the drawings) that protrudes linearly from the crest of the die in the (positive) principal deposition direction D. The deposition opening 106 is forms the crest of the die of the deposition device 102, or may be formed at an outermost end of the lip portion of the die of the deposition device 102.

The cleaning device 104 may be arranged above the deposition device 102 and above the deposition opening 106. Herein, the expressions "above", "upward", "below", "bottom", "downward" and the like, which indicate a relative position and orientation in a vertical direction, refer to the gravitation, unless indicated otherwise or technically inappropriate. The cleaning device 104 is configured to discharge the cleaning fluid F (not shown in FIG. 2) toward the deposition opening 106. Optionally, the cleaning device 104 may be moved while discharging the cleaning fluid F toward the deposition opening 106.

The battery manufacturing system 100 may further comprise one or more supply conduits. In the example shown in FIG. 2, a first supply conduit 108a supplies the cleaning device 104 with the cleaning fluid F. A second supply conduit 108b may also supply the cleaning device 104 with the cleaning fluid F. Alternatively or additionally, the second supply conduit 108b may supply the cleaning device 104 with a drying gas, for example air. Although not shown in FIG. 2, each of the supply conduits 108a, 108b may be fluidly connected to a respective container, a respective reservoir, a respective supply, or the like from which the cleaning device 104 receives the cleaning fluid F and/or, optionally, the drying gas. Although two supply conduits 108a and 108b are shown in the examples, the invention is not limited thereto, and the number of the supply conduits may be varied depending on the individual requirements and design.

The cleaning device 104 comprises a cleaning head 110 that is fluidly connected to the supply conduits 108a and 108b. The bottom surface of the cleaning head 110 (and/or the housing 112) is recessed inwardly so as to correspond to the top face of the die of the deposition device 102. In particular, the bottom surface of the cleaning head 110 (and/or the housing 112) is recessed inwardly in the (positive) deposition direction D toward a central axis parallel to the width direction W or to a central plane that is perpendicular to the height direction H. The bottom surface of the cleaning head 110 thus includes two inclined surfaces that run from a respective sidewall of the cleaning head 110 to the central axis. The inclined surfaces may be flat. Accordingly, the bottom surface of the cleaning head 110 is provided so as to extend around the deposition opening 106 of the deposition device 102 (of its die). In particular, the cleaning device 104 is arranged so that its central axis is aligned with the linear crest of the die of the deposition device 102.

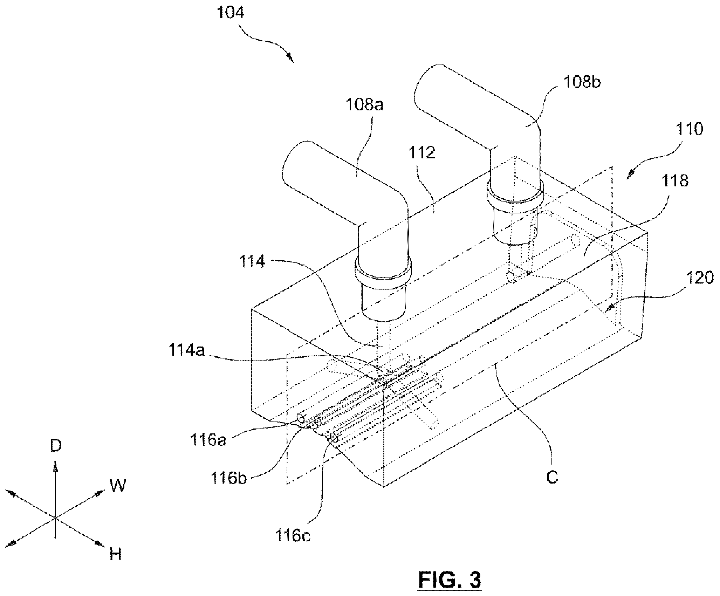

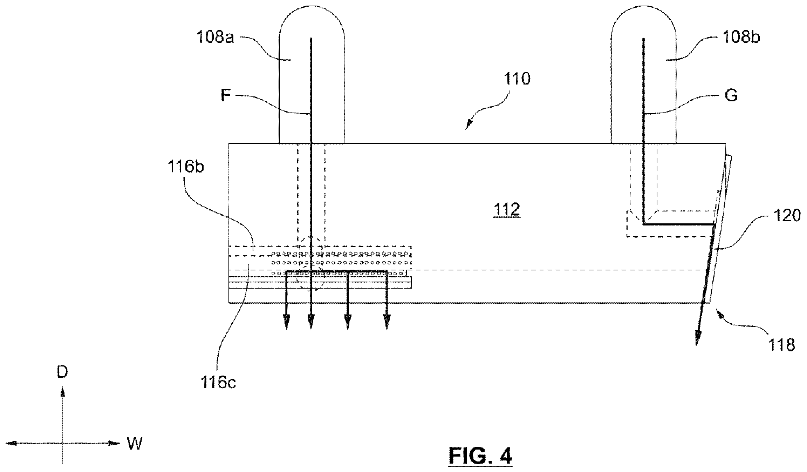

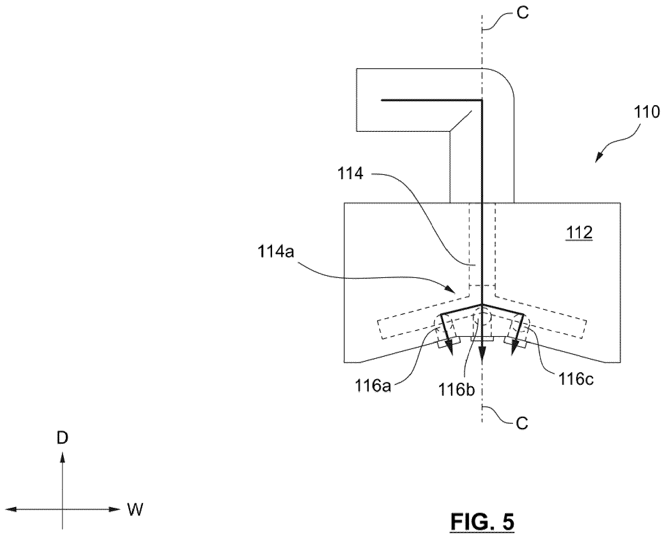

FIG. 3 to 5 each depict a cleaning device 104 according to an example, wherein FIG. 3 shows a perspective view, FIG. 4 shows a cross-sectional front view and FIG. 5 shows a cross-sectional side view. A housing 112 is depicted transparent in FIG. 3, 4 and 5 to show the arrangement of the components inside.

The cleaning device 104 comprises the cleaning head 110. The cleaning device 104, particularly its cleaning head 110, comprises a housing 112 that accommodates a tube 114, a distributor 114a, nozzles 116a-116c and a blower 118. For the sake of brevity, the following description of the outer structural features of the cleaning head 110 may accordingly apply to the housing 112 of the cleaning device 104, unless indicated otherwise or technically inappropriate.

The cleaning head 110, particularly its housing 112, may be provided as a hollow case made of a solid material, for example made of steel, aluminum or metal alloy. The cleaning head 110 may comprise openings on the bottom surface to allow the cleaning fluid F to be discharged from the nozzles 116-116c, as implied in FIG. 4. Optionally, the cleaning head 110 comprises a further opening on the bottom surface to allow the drying gas G (e.g. air) to be blown downward by the blower 118, as implied in FIG. 4.

The bottom surface of the cleaning head 110 (and/or the housing 112) is recessed inwardly in the principal deposition direction D toward a central plane C of the cleaning head 110. The central plane C indicates a plane that divides the cleaning device 104, particularly its cleaning head 110 or its housing 112, into halves. In specific examples, the cleaning device 104, particularly its cleaning head 110 or its housing 112, may be approximately symmetrical with respect to the central plane C. The central plane C may be perpendicular to the height direction H and/or parallel to the principal deposition direction D and the width direction W.

The bottom surface of the cleaning head 110 thus includes two inclined surfaces each extending from a respective sidewall of the cleaning head 110 toward the central plane C. The inclined surfaces of the bottom face of the cleaning head 110 may be flat. In particular, the inclined surface of the bottom surface of the cleaning head 110 may be inclined from a plane that is perpendicular to the principal deposition direction D. Accordingly, the bottom surface of the cleaning head 110 may have a shape that corresponds to (matches or structurally fits to) the top face of the die of the deposition device 102 as described above. In particular, the the bottom surface of the cleaning head 110 may extend so as to surround the deposition opening 106 of the deposition device 102.

The nozzles 116a-116c are arranged in a bottom part of the cleaning head 110. The nozzles 116a-116c may be shaped, dimensioned and/or arranged so as to be aligned with the bottom surface of the cleaning head 110. The nozzles 116a-116c each face the deposition opening 106.

Further, the nozzles 116a-116c may be arranged approximately at a uniform distance from the deposition opening 106. In particular, the nozzles 116a-116c are arranged so to as to discharge the cleaning fluid F toward the deposition opening 106 under different angles. The nozzles 116a-116c are spaced from each other in the height direction H. Specifically, a first nozzle 116a and a third nozzle 116c are arranged at outer positions (in terms of the height direction H) with a second nozzle 116b arranged therebetween. In particular, the second nozzle 116b may be arranged at the central plane C of the cleaning device 104, particularly its cleaning head 110.

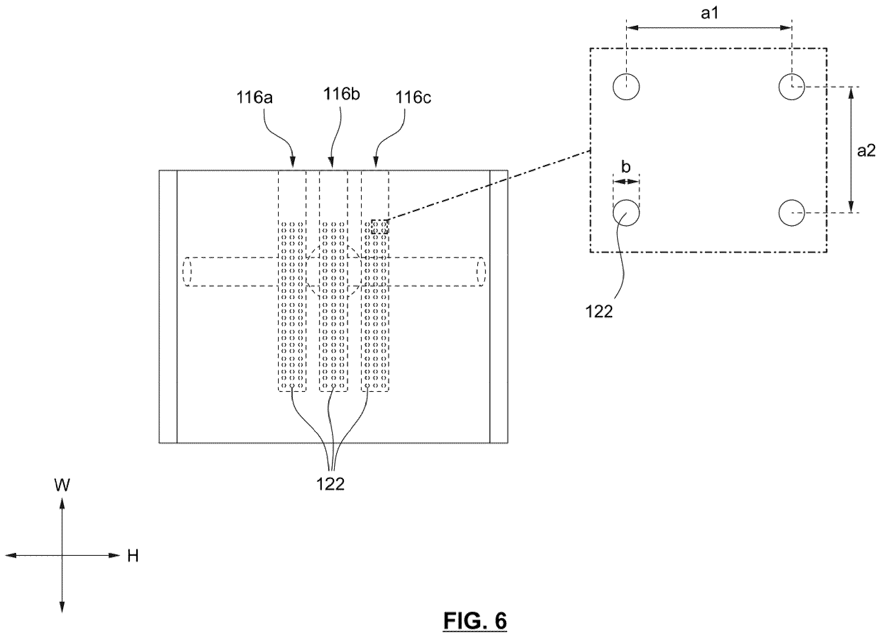

Each of the nozzles 116a-116c comprises one or more orifices through which the cleaning fluid F can discharge. The arrangement and configuration of the orifices may be as mentioned above and/or as discussed below with reference to FIG. 6.

The blower 118 is configured to blow the drying gas G toward the deposition opening 106, see FIG. 4. The blower 118 may comprise a nozzle 120 through which the drying gas G can be discharged. The nozzle 120 of the blower 118 may be provided as a single through-opening formed in the bottom surface of the cleaning head 110, particularly its housing 112. Alternatively, the nozzle 120 of the blower 118 may be provided as multiple through-openings formed in the bottom surface of the cleaning head 110, particularly its housing 112. The drying gas G may be received through (or supplied to via) the second supply conduit 108b and conducted through the nozzle 120. The nozzle 120 may be slit-shaped and elongated along the height direction H in a top view (i.e., in a view parallel to the principal deposition direction D). The nozzle 120 may extend over substantially the entire length of the cleaning head 110 in the height direction H. The nozzle 120 of the blower 118 may be shaped, dimensioned and/or arranged so as to be aligned with the bottom surface of the cleaning head 110, which may be provided as described above.

As mentioned, the drying gas G may be any gas that is suited to carry away (remove) humidity, in particular residues of the cleaning fluid that has been discharged, from the deposition opening 106. For example, the drying gas G may be or contain air. The blower 118 may allow for removing the cleaning fluid F from the deposition opening 106, e.g., for drying purposes, without making physical contact with the deposition device, thus preventing any damage or contamination of the deposition device.

The blower 118 is arranged in a position distanced from the nozzles 116a-116c by a specific distance in the width direction W. For example, the blower 118 may be arranged so that a distance of 10 mm to 200 mm, or 25 mm to 100 mm, is maintained between the blower 116 and any of the nozzles 116a-116c. In particular, the blower 118 may be arranged at an outermost position (e.g., in terms of the width direction W) inside the cleaning head 110, particularly in its housing 112, thus saving space requirements.

In the example shown in FIG. 3 to 5, the slit-shape of the nozzle 120 of the blower 118 allows for blowing a thin, high-velocity sheet of the drying gas G onto the deposition opening 106. Accordingly, the blower 118 may produce a laminar stream of the drying gas G. For example, the nozzle 120 of the blower 118 may have a slit gap of 0.1 mm to 5 mm, or 0.2 mm to 2 mm, or 0.3 mm to 1 mm. The blower 118 may be considered as an air knife.

As best shown in FIG. 5, the cleaning head 110 comprises the tube 114 and the distributor 114a. The tube 114 is fluidly connected to the supply conduit 108a and is configured to guide the cleaning fluid F from the supply conduit 108a toward the nozzles 116a-116c. The distributor 114a is fluidly connected to each of, and connected between, the tube 114 and the nozzles 116a-116c. The distributor 114a is configured to distribute the cleaning fluid F from the tube 114 to each of the nozzles 116a-116c.

FIG. 6 is a plan view of nozzles 116a-116c of a cleaning device 104 according to an example. In particular, FIG. 6 may show the nozzles 116a-116c from below, i.e., in the positive principal deposition direction D of the battery manufacturing system. The nozzles 116a-116c as shown in FIG. 6 may correspond to the nozzles 116a-116c as described above and shown in FIG. 3 to 5.

In the plan view as shown in FIG. 6, the nozzles 116a-116c may be arranged side by side in the height direction H. Each of the nozzles 116a-116c comprises multiple orifices 122 that are arranged in a respective array. The orifices may generally have any suitable shape, including for example a polygonal shape, an oval shape and a circular shape. In the example of FIG. 6, each of the orifices 122 has a circular shape. Particularly, the orifices 122 may each have a circular shape with a diameter b of 0.05 mm to 2.0 mm, or 0.1 mm to 1.0 mm, or 0.1 mm to 0.5 mm.

The orifices 122 are arranged in a first number of straight columns and in a second number of straight rows. The first number and the second number may be each and individually one or any other natural number. The first number and the second number may be equal or different from each other. In the example of FIG. 6, 25 rows (parallel to the height direction H) and 3 columns (parallel to the width direction W) are shown. But these numbers are only for illustrative purposes and do not limit the invention thereto.

As shown in an enlarged view in FIG. 6, two neighboring orifices may be distanced by a first distance a1 in the height direction H, and distanced by a second distance a2 in the width direction W. The first distance a1 and the second distance a2 may be equal (not shown in the drawings) or different from each other as shown in FIG. 6. Each of the distances a1 and a2 may be 0.1 mm to 2.5 mm, or 0.3 mm to 2.3 mm, or 0.5 mm to 2.0 mm. Accordingly, the orifices 122 of each of nozzles 116a-116c may be arranged so as to maintain a minimum distance between one another given by the distances a1 and a2. The first distance a1 and the second distance a2 may be measured between the centers of the orifices as shown in FIG. 6.

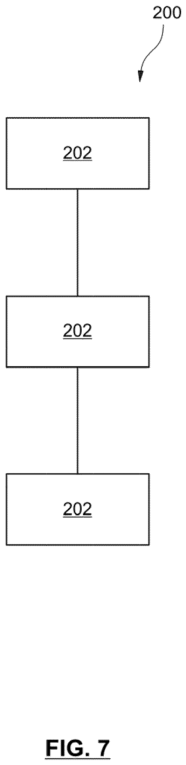

FIG. 7 is a flow diagram of a battery manufacturing method 200 according to an example. As mentioned, the features as detailed above with respect to the battery manufacturing system as disclosed herein may also apply accordingly to the battery manufacturing method 200. A repetitive description is omitted for the sake of conciseness.

At 202, a battery material is discharged through a deposition opening of a deposition device in a principal deposition direction. The deposition device, the deposition opening and the battery material may be each as detailed above. The operation of discharging the battery material may be performed as detailed above.

At 204, a cleaning fluid is discharged toward the deposition opening by a cleaning device arranged outside of the deposition device. The cleaning device and the cleaning fluid may be provided as detailed above. The operation of discharging the cleaning fluid may be performed as detailed above, in particular using the nozzles as described above.

At 206, the cleaning device is moved perpendicular and/or parallel to the principal deposition direction. The operation of moving the cleaning device may be performed as detailed above, in particular using the actuator or electromotor as described above.

As mentioned, the components of the battery manufacturing system disclosed herein, including particularly the deposition device, the cleaning device and its components including the cleaning head, the nozzles and the blower, and the deposition opening, may each and individually implement any, some or all of the features described above in a general manner and described with respect to the different examples. The same applies to the individual operations of the battery manufacturing method and the components mentioned therein.

### LIST OF REFERENCE SIGNS

- 100: battery manufacturing system
- 102: deposition device
- 102a, 102b: die part
- 104: cleaning device
- 106: deposition opening
- 108a, 108b: supply conduit
- 110: cleaning head
- 112: housing
- 114: tube
- 114a: distributor
- 116a-116c: nozzles
- 118: blower
- 120: slit-shaped nozzle
- 122: orifice/opening
- 200: battery manufacturing method
- 202-206: method steps
- a1, a2: distance between orifices
- b: diameter of an orifice
- C: central plane
- D: principal deposition direction
- F: cleaning fluid
- G: drying gas
- H: height direction
- M: movement direction
- W: width direction

## Claims

1. A battery manufacturing system comprising:
a deposition device configured to discharge a battery material through a deposition opening in a principal deposition direction; and
a cleaning device arranged outside of the deposition device and configured to discharge a cleaning fluid toward the deposition opening,
wherein the cleaning device is configured to move perpendicular and/or parallel to the principal deposition direction.

2. The battery manufacturing system of claim 1,
wherein the deposition device and the cleaning device are arranged above one another in a direction parallel to the gravitation.

3. The battery manufacturing system of claim 1 or 2,
wherein the deposition opening is elongated linearly along a width direction,
wherein the cleaning device is configured to move along the width direction at a constant distance from the deposition opening,
wherein the width direction is perpendicular to the principal deposition direction.

4. The battery manufacturing system of the preceding claims,
wherein the cleaning device comprises a first nozzle configured to discharge the cleaning fluid in a first nozzle direction toward the deposition opening,
wherein the cleaning device comprises a second nozzle configured to discharge the cleaning fluid in a second nozzle direction toward the deposition opening,
wherein the first nozzle direction and the second nozzle direction are not parallel to each other.

5. The battery manufacturing system of claim 4,
wherein the cleaning device further comprises a third nozzle configured to discharge the cleaning fluid in a third nozzle direction toward the deposition opening,
wherein the third nozzle direction is not parallel to both of the first nozzle direction and the second nozzle direction.

6. The battery manufacturing system of claim 4 or 5,
wherein one of the first nozzle direction and the second nozzle direction is parallel to, or is inclined at an angle of 10 degrees or less from, the principal deposition direction.

7. The battery manufacturing system of any of claims 4 to 6,
wherein the first nozzle comprises an array of orifices through which the cleaning fluid can be discharged toward the deposition opening,
wherein the orifices of the array of orifices are arranged that a minimum distance of 0.1 mm to 2.5 mm, or 0.5 mm to 2.0 mm, between two neighboring orifices is maintained.

8. The battery manufacturing system of any of claims 4 to 7,
wherein the first nozzle comprises a circular orifice with a diameter of 0.05 mm to 2 mm, or 0.1 mm to 0.5 mm.

9. The battery manufacturing system of any of claims 4 to 8,
wherein the cleaning device further comprises a blower configured to blow a drying gas toward the deposition opening.

10. The battery manufacturing system of claim 9,
wherein the blower is arranged so that its distance to any of the first nozzle and the second nozzle is 10 mm to 200 mm, or 25 mm to 100 mm.

11. The battery manufacturing system of any of the preceding claims, further comprising:
an actuator, particularly an electromotor, configured to move the cleaning device in a direction perpendicular and/or parallel to the principal deposition direction of the deposition device.

12. The battery manufacturing system of any of the preceding claims, further comprising:
a guide rail on which the cleaning device is mounted, the guide rail extending in a direction perpendicular to the principal deposition direction and configured to guide the cleaning device at a constant distance from the deposition opening.

13. An automated plant, in particular a smart factory, comprising the battery manufacturing system of any of the preceding claims.

14. A battery manufacturing method comprising:
discharging a battery material through a deposition opening of a deposition device in a principal deposition direction;
by a cleaning device arranged outside of the deposition device, discharging a cleaning fluid toward the deposition opening; and
moving the cleaning device perpendicular and/or parallel to the principal deposition direction.

15. The battery manufacturing method of claim 14, further comprising:
blowing a drying gas toward the deposition opening to dry the deposition opening from the cleaning fluid.

## Amended claims

### Amended claims in accordance with Rule 137(2) EPC.

1. A battery manufacturing system (100) comprising:
a deposition device (102) configured to discharge a battery material through a deposition opening (106) in a principal deposition direction (D); and
a cleaning device (104) arranged outside of the deposition device (102) and configured to discharge a cleaning fluid (F) toward the deposition opening (106),
wherein the cleaning device (104) is configured to move perpendicular and/or parallel to the principal deposition direction (D).

2. The battery manufacturing system (100) of claim 1,
wherein the deposition device (102) and the cleaning device (104) are arranged above one another in a direction parallel to the gravitation.

3. The battery manufacturing system (100) of claim 1 or 2,
wherein the deposition opening (106) is elongated linearly along a width direction (W),
wherein the cleaning device (104) is configured to move along the width direction (W) at a constant distance from the deposition opening (106),
wherein the width direction (W) is perpendicular to the principal deposition direction (D).

4. The battery manufacturing system (100) of the preceding claims,
wherein the cleaning device (104) comprises a first nozzle (116a) configured to discharge the cleaning fluid (F) in a first nozzle direction toward the deposition opening (106),
wherein the cleaning device (104) comprises a second nozzle (116b) configured to discharge the cleaning fluid (F) in a second nozzle direction toward the deposition opening (106),
wherein the first nozzle direction and the second nozzle direction are not parallel to each other.

5. The battery manufacturing system (100) of claim 4,
wherein the cleaning device (104) further comprises a third nozzle (116c) configured to discharge the cleaning fluid (F) in a third nozzle direction toward the deposition opening (106),
wherein the third nozzle direction is not parallel to both of the first nozzle direction and the second nozzle direction.

6. The battery manufacturing system (100) of claim 4 or 5,
wherein one of the first nozzle direction and the second nozzle direction is parallel to, or is inclined at an angle of 10 degrees or less from, the principal deposition direction (D).

7. The battery manufacturing system (100) of any of claims 4 to 6,
wherein the first nozzle (116a) comprises an array of orifices (122) through which the cleaning fluid (F) can be discharged toward the deposition opening (106),
wherein the orifices (122) of the array of orifices (122) are arranged that a minimum distance of 0.1 mm to 2.5 mm, or 0.5 mm to 2.0 mm, between two neighboring orifices (122) is maintained.

8. The battery manufacturing system (100) of any of claims 4 to 7,
wherein the first nozzle (116a) comprises a circular orifice with a diameter of 0.05 mm to 2 mm, or 0.1 mm to 0.5 mm.

9. The battery manufacturing system (100) of any of claims 4 to 8,
wherein the cleaning device (104) further comprises a blower (118) configured to blow a drying gas (G) toward the deposition opening (106).

10. The battery manufacturing system (100) of claim 9,
wherein the blower (118) is arranged so that its distance to any of the first nozzle (116a) and the second nozzle (116b) is 10 mm to 200 mm, or 25 mm to 100 mm.

11. The battery manufacturing system (100) of any of the preceding claims, further comprising:
an actuator, particularly an electromotor, configured to move the cleaning device (104) in a direction perpendicular and/or parallel to the principal deposition direction (D) of the deposition device (102).

12. The battery manufacturing system (100) of any of the preceding claims, further comprising:
a guide rail on which the cleaning device (104) is mounted, the guide rail extending in a direction perpendicular to the principal deposition direction (D) and configured to guide the cleaning device (104) at a constant distance from the deposition opening (106).

13. An automated plant, in particular a smart factory, comprising the battery manufacturing system (100) of any of the preceding claims.

14. A battery manufacturing method (200) comprising:
discharging (202) a battery material through a deposition opening (106) of a deposition device (102) in a principal deposition direction (D);
by a cleaning device (104) arranged outside of the deposition device (102), discharging (204) a cleaning fluid (F) toward the deposition opening (106); and
moving (206) the cleaning device (104) perpendicular and/or parallel to the principal deposition direction (D).

15. The battery manufacturing method (200) of claim 14, further comprising:
blowing a drying gas (G) toward the deposition opening (106) to dry the deposition opening (106) from the cleaning fluid (F).
